# EUROPEAN PATENT APPLICATION

(11) **EP 4 386 936 A1**
(43) Date of publication of application: **19.06.2024**
(21) Application number: 22213100.5
(22) Date of filing: 13.12.2022
(51) Int. Cl.: H01M 10/613, H01M 10/625, H01M 10/6561, H01M 50/30, H01M 50/342, H01M 50/383

(54) **COOLING ARRANGEMENT FOR THERMAL RUNAWAY EVENTS**

(71) Applicant: Airbus S.A.S., 31700 Blagnac (FR)
(72) Inventor: FRIEDBERGER, Alois, 82024 Taufkirchen (DE); FRIEDL, Stephan, 82024 Taufkirchen (DE)
(74) Representative: OTN Airbus SAS

(57) **Abstract**

The present invention relates to a cooling for thermal runaway events in battery arrangements of vehicles. In order to provide an improved cooling, an arrangement (10) for a vehicle (14) is provided. The arrangement comprises a conduit (16). The conduit comprises: a primary inlet (18), a secondary inlet (20), an outlet (22) and an air flow passage (24). The air flow passage is provided between the primary inlet and the outlet. The primary inlet is configured to be fluid-dynamically connected to an enclosed volume (26) accommodating a battery arrangement (28), in order to direct a decompressing fluid stream (30) originating from the battery arrangement in a thermal runaway event via the air flow passage. The outlet is configured to discharge the decompressing fluid stream to an outboard environment (32) of the vehicle. The secondary inlet is configured to provide a supply fluid (34) cooling the decompressing fluid stream.

## Description

### FIELD OF THE INVENTION

The present invention relates to a cooling arrangement for cooling of thermal runaway events, to an electric energy supply system with a cooling of thermal runaway events, to a vehicle comprising the electric energy supply system and to a method for cooling thermal runaway events.

### BACKGROUND OF THE INVENTION

Battery cells can go into thermal runaway conditions. Thermal runaway leads to the development of hot gases inside the battery cells. The gases can be toxic and structuredamaging. This hot gas can lead to overpressure and rupture of the battery housing and even to thermal runaway of further cells. For example, in aircraft applications, the gas needs to be guided out from the battery pack to the outside of the aircraft. In high grade batteries, the hot vented gas is guided in specific channels. For example, in aircraft applications, as gas pipes for the thermal runaway of batteries, steel metal flex tubes are used capable of withstanding the high temperatures that may occur in thermal runaway events. However, these tubes are rather heavy in weight and they have also shown to be quite expensive.

### SUMMARY OF THE INVENTION

There may thus be a need for improvement for handling of thermal runaway events in terms of weight and costs.

The object of the present invention is solved by the subject-matter of the independent claims; further embodiments are incorporated in the dependent claims. It should be noted that the following described aspects of the invention apply also for the cooling arrangement for cooling of thermal runaway events, for the electric energy supply system with a cooling of thermal runaway events, for the vehicle comprising the electric energy supply system and for the method for cooling thermal runaway events.

According to the present invention, a cooling arrangement for cooling of thermal runaway events of batteries in a vehicle is provided. The arrangement comprises a conduit. The conduit further comprises: a primary inlet, a secondary inlet, an outlet and an air flow passage. The air flow passage is provided between the primary inlet and the outlet. The primary inlet is configured to be fluid-dynamically connected to an enclosed volume accommodating a battery arrangement, in order to direct a decompressing fluid stream originating from the battery arrangement in a thermal runaway event via the air flow passage. The outlet is configured to discharge the decompressing fluid stream to an outboard environment of the vehicle. The secondary inlet is configured to provide a supply fluid cooling the decompressing fluid stream.

As an effect, a resulting lower temperature due to the cooling allows simpler ducts for discharging the gases in thermal runaway events in terms of lower heat resistant requirements.

In an example, a cooling is provided that enforces the thermal runaway event into cooling itself and will therefore mitigate the propagation of the exothermic reaction within the battery. In other words, the energy release of the chemical reaction is forced into a feedback loop.

According to an example, the secondary inlet is located between the primary inlet and the outlet. A narrowing of the conduit is arranged between the primary inlet and the secondary inlet. The narrowing is provided as a continuously decreasing cross section configured to cause a downstream acceleration of the fluid stream within the air flow passage towards to the outlet in order to generate an extraction force at the secondary inlet to induce a flow of the supply fluid via the secondary inlet into the decompressing fluid stream.

As an effect, the cooling also helps in preventing the ignition of the stream of the decompressing fluid.

According to an example, the conduit of the arrangement is provided with a thermal insulation arrangement comprising an insulating envelope enclosing at least a part of the conduit. The insulating envelope forms at least one supply channel arranged between the conduit and the insulating envelope. In an option, the supply channel is fluid-dynamically connected to the secondary inlet and configured to be fluid-dynamically connected to the outboard environment of the vehicle.

As an effect, continuous transport of heat away from the conduit is provided.

As an advantage, the conduit is not overheated by the hot decompressing fluid stream.

According to an example, at least one sealing closure is provided at the arrangement. The sealing closure is configured to provide a fluid-dynamically closed sealing in a first operation mode and to provide a fluid-dynamical connection in a second operation mode. The sealing closure is configured to change from the first operation mode to the second operation mode in case of the thermal runaway event. In a first option, the outlet is provided with a first of the sealing closure configured to fluid-dynamically seal off the air flow passage from the outboard environment of the vehicle in the first operation mode and to fluid-dynamically connect the air flow passage with the outboard environment in the second operation mode. In a second option, instead or in addition to the first option, the secondary inlet is provided with a second of the sealing closure configured to fluid-dynamically seal off the air flow passage from secondary inlet towards the air flow passage in the first operation mode and to fluid-dynamically connect the air flow passage with the secondary inlet in the second operation mode.

According to an example, the outlet of the arrangement is configured for a fluid-dynamic connection to the outboard environment as a primary opening to generate a suction force at the opening by an airstream passing the outlet in case of a moving vehicle. As a further option, instead or in addition, the secondary inlet is in a fluid-dynamic connection to the outboard environment as a secondary opening to the outside of the vehicle to generate a pressure force at the second inlet by the airstream passing the outlet in case of a moving vehicle. In an option, provided in addition, both openings are configured to open to the passing airstream by overpressure in the battery element.

According to an example, provided as an additional or alternative option to the narrowing passage examples, the secondary inlet is configured to be fluid-dynamically connected to a cooling fluid supply configured to actively feed the supply fluid into the decompressing fluid stream.

According to the present invention, also an electric energy supply system with a cooling of thermal runaway events of an electric energy source for a vehicle is provided. The system comprises at least one housing forming an enclosed volume configured for accommodating at least one energy source arrangement battery element and at least one cooling arrangement according to one of the preceding examples. The primary inlet is fluid-dynamically connected to the enclosed volume. In an option, the outlet is configured to be fluid-dynamically connected outboard of the vehicle.

According to the present invention, also a vehicle comprising an electric energy supply with a safety cooling for thermal runaway events is provided. The vehicle comprises a body structure with a vehicle envelope enclosing at least one vehicle space, an electric energy supply system and at least one electric load. The at least one electric load is supplied by the electric energy supply system. The electric energy supply system is arranged within the vehicle space. The outlet is fluid-dynamically connected outboard of the vehicle. In an option, provided in addition, the vehicle is provided as at least one of the group comprising an aircraft, an automotive vehicle, a ship and a train.

The term aircraft comprises commercial airplanes, e.g. for passengers or cargo, military airplanes, airships and helicopter. The term aircraft also comprises unmanned aerial vehicles (UAVs) of all kind and for various purposes.

According to the present invention, also a method for cooling thermal runaway events is provided. The method comprises the following steps: A decompressing fluid stream is generated in a conduit due to a thermal runaway event of a battery in a vehicle. Further, cooling fluid is supplied to the decompressing fluid stream. The decompressing fluid stream originating from the battery arrangement is directed and the decompressing fluid stream is discharged to an outboard environment of the vehicle.

According to an aspect, venting of battery cells during thermal runaway events causes a mass flow with a high flow speed of the released gas, i.e., the decompressing fluid. This mass flow is usable to mix the hot gas itself with cold gas by application of the "venturi-pump" principle. Depending on the ratio of the mix and the temperatures of the species, the maximum temperature of the gas will be significantly reduced. This principle is directly applicable on each head, i.e., terminal, of the battery cells or in gas venting manifolds inside the battery cell or in front of the exhaust pipe for venting. The application of the technology on battery cells and manifolds reduces the thermal runaway probability of battery cells because of the reduced heat transfer on lower temperature levels.

As an effect, this reduces the resulting pressure peak inside the battery housing. The application on the release port would lower the temperature level, which the exhaust pipe, must withstand. The venturi-pump principle is applicable on battery module designs. For example, by usage of high temperature resistant ceramic parts above the battery cell head at the battery terminal. Depending on the concrete design, the gas volume of the module or ambient air are usable as mixing gas. Especially for the application in front of the exhaust pipe, a coaxial exhaust pipe is usable. Cold air from the aircraft outside will be sucked in on the outer diameter, then mixed with the hot venting gas and finally exhausted through the inner area of the pipe. This causes a double cooling effect and a thermal encapsulation to the environment of the exhaust pipe.

According to an aspect, the conduit directs the decompressing fluid stream away in such a manner that it is cooled at the same time, thus avoiding the need for high temperature resistant ducts for discharging the decompressing fluid stream.

In summary and advantageously, the present invention will reduce the temperature of the venting gas to avoid thermal runaway between battery cells and will reduce the weight and the costs of the gas tubes, e.g. conduits, to exhaust the hot gas from the vehicle bearing the battery cells.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 schematically shows a cross section of an example of a cooling arrangement.
Fig. 2 schematically shows a cross section of a further example of a cooling arrangement having a narrowing.
Fig. 3 schematically shows a cross section of another example of a cooling arrangement having a narrowing and a thermal insulation arrangement.
Fig. 4 shows another example of a cooling arrangement.
Fig. 5 schematically shows an example of a cooling arrangement connected to the outboard environment and an electric energy supply system with a cooling for thermal runaway events.
Fig. 6 schematically shows an aircraft as an example of a vehicle empowered by an electric energy supply system with a cooling for thermal runaway events.
Fig. 7 schematically shows basic steps of an example of a method for cooling thermal runaway events.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of', when preceding a list of elements, modify the entire list of elements and do not modify the individual elements of the list.

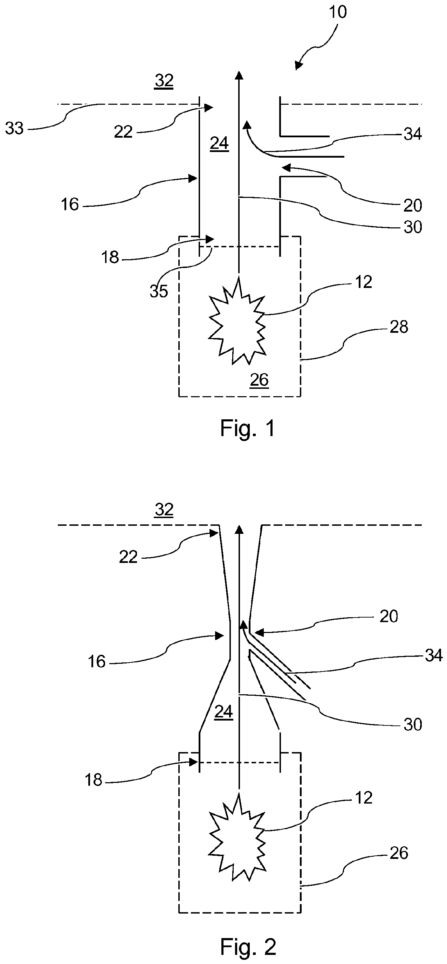

Fig. 1 schematically shows a cross section of an example of a cooling arrangement 10. The cooling arrangement 10 for cooling of thermal runaway events 12 of batteries in a vehicle 14, comprises a conduit 16. The conduit comprises, a primary inlet 18, a secondary inlet 20, an outlet 22 and an air flow passage 24. The air flow passage is provided between the primary inlet and the outlet. The primary inlet is configured to be fluid-dynamically connected to an enclosed volume 26 accommodating a battery arrangement 28, in order to direct a decompressing fluid stream 30 originating from the battery arrangement in a thermal runaway event via the air flow passage. The outlet is configured to discharge the decompressing fluid stream to an outboard environment 32 of the vehicle. The secondary inlet is configured to provide a supply fluid 34 cooling the decompressing fluid stream.

The battery arrangement 28 is shown with broken lines indicating that the cooling arrangement 10 is provided for use with a battery arrangement 28, but the latter not necessarily being part of the cooling arrangement 10.

In Fig. 1, a first broken line 35 indicates a removable cover of the enclosed volume of the battery arrangement 28. The cover 35 may be destroyed in case of a thermal runaway event to allow the flow of the stream.

In Fig. 1, a second broken line 33 indicates an outer skin of the vehicle, e.g. a skin of an aircraft.

The term "battery arrangement" can also be referred to as electrochemical cell, battery or battery cell, cell or battery pack. In an example, the battery is a Li-Ion-battery comprising a polymer electrolyte. In another example, the battery is a lithium-air battery.

In an example, the battery comprises a cylindrical cell having a rod shape.

In an example, the battery comprises battery terminals on opposing sides of the rod.

In another example, the battery comprises battery terminals on the same side of the rod.

The term "conduit" relates to a canal, channel or duct that is configured to guide a fluid stream, e.g., a gaseous stream also comprising little droplets of liquids and small particles. The conduit 16 relates to the enclosing structure but also to the enclosed volume, i.e., lumen. The term "conduit" can also be referred to as exhaust pipe.

The term "primary inlet" relates to a first or main inlet, i.e., an opening for access of a fluid stream into the conduit. The primary inlet 18 is thus a first opening of the conduit 16.

The term "secondary inlet" relates to a second or subsequent inlet, i.e., an opening for access of another stream, e.g., gaseous stream, into the conduit. The secondary inlet 20 is thus a second opening of the conduit 16.

The term "outlet" relates to a further opening of the conduit, which further opening is provided for discharging or exiting of the fluid stream inside the conduit. The outlet 22 is thus a further opening of the conduit, e.g., a third opening.

The term "air flow passage" relates to a lumen, i.e., free space enclosed by guiding surfaces, for the flow of air. The air flow passage 24 thus relates to the inside of the conduit 16.

The term "thermal runaway event" relates to an event in a battery, in which an exothermic reaction, e.g., by short circuits, within an electrochemical cell takes place, leading to e.g., overheating, most of the times in a short amount of time, and sometimes resulting in an explosion of the electrochemical cell. In an example, during a thermal runaway event, the electrochemical cell is at any charged state. This comprises full-charged cell states, as well as half-charged or even lower charged cell states. In an example, the thermal runaway event lasts in the range of seconds.

The term "fluid" relates to e. g. a liquid or gas, or other substance that continuously deforms, i.e., flows, under an applied shear stress, or external force.

In an example, the shear stress, or external force is (passively) induced by the "battery arrangement", "the conduit", "the primary inlet", the "secondary inlet", "the outlet", "the air flow passage" or any other physical barrier.

The term "fluid-dynamically" relates to the flow of the fluid under the laws of conservation of mass, conservation of linear momentum, and conservation of energy and the assumption, that fluids are continuous, from one location to another location.

The term "decompressing" relates to a fluid that changes from high pressure to low pressure.

The term "stream" describes the flow of a fluid along a predominant direction in three-dimensional space.

The term "originating" describes the source of the fluid, the starting point of the flow of the fluid in the reverse direction of the "stream" of the fluid. The origin of the stream being the battery arrangement, the battery, any component of the battery or any component of the battery that alters during the thermal runaway event.

The term "discharge" refers to the decompressing fluid outside the battery. The point of discharge opposes the point of the origin of the fluid stream. The discharge is the end of the fluid stream and takes place at the outlet at the end of the cooling arrangement.

The term "vehicle" refers to any object that permits ground-based, air-based, water-based or space-based locomotion.

In an option, the location of the discharge is outside the vehicle.

The term "supply fluid" relates to a fluid, e.g., a gas or a liquid that can be added to the decompressing fluid stream. The supply fluid alters the decompressing fluid stream 30 in terms of e.g., temperature, pressure, volume, chemical composition. The supply fluid cools the decompressing fluid stream 30.

In a first option, the secondary inlet 20 is configured to provide the supply fluid as gas.

In a second option, the secondary inlet 20 is configured to provide the supply fluid as gas carrying a liquid medium.

In a third option, the secondary inlet 20 is configured to provide the supply fluid as liquid medium.

In an example, a dielectric fluid is drawn in by the Venturi-effect instead of a cooling gas. Optionally, a fire extinguishing liquid is drawn in by the Venturi-effect.

In an example, not shown in detail, a module with a larger number of individual battery cells in series and parallel connection is provided. In an upper level (where all the positive poles are located), a cover is provided, in which a certain number of batteries are always grouped together by channels, through which the hot gases can escape in the event of a runaway. To prevent the cooling liquid from flooding the entire module, each individual channel can be sealed against the cooling liquid. The sealing can be done by a bursting membrane, which occurs due to the suction effect of the Venturi. Then, only the cells that are combined in the respective channel are flushed. For this purpose, in an example, the individual channels are fluidically separated from each other and the cells of different channels must be fluidically separated from each other. The arrangement of the reservoir with the cooling fluid and the seals to the channels can be on the side of the module or above the module (above the channels). Alternatively, the device, i.e. the cooling arrangement, is not made at the module level, but at the cell level. In this case, a venturi nozzle is assigned to each cell. This can be done by a fluidic board that is placed on top. This is similar to an electrical circuit board but contains channels for fluids. As an alternative to a bursting membrane above each cell, a fusible link can be used as a seal that opens during runaway due to the high temperature. For example, the venturi nozzle with seal can be incorporated into the fluidic board as a component above each cell. The overall design is then: (A) level with the battery cells, (B) above this level with the channels through which the hot gas is discharged, and (C) above further level, e.g. fluidics board, providing the cooling fluid which is fed in above the hot cell and then cooled and discharged via level (B) with the hot gas flow cooled by it.

The term "outboard environment" is the space comprising the vehicle.

In an example, during a thermal runaway event, an exothermic reaction causes a sudden expansion and degradation of the components inside the battery element leading to a high-pressure peak inside the battery element. For example, the high pressure leads to a breaking of a membrane of a battery and release of the pressure in form of a decompressing fluid.

The term "decompressing fluid stream" can also be referred to as hot gas, vent gas, venting gas or exhaust gas.

In an example, the decompressing fluid stream 30 comprises gases and aerosols of liquid and/or particulate solid matter from the enclosed volume accommodating the battery arrangement.

The gases comprise e.g., hydrocarbons, carbon dioxide or carbon monoxide or hydrofluoric acid. The liquid comprises electrolyte. The particulate solid matter comprises solid electrolyte, anode material, cathode material or separator material.

In an example, the resulting decompressing fluids may be corrosive for the structural parts elements of an aircraft structure and may also be toxic to passengers aboard an aircraft.

In an example, the enclosed volume 26 comprises substances that are highly reactive under atmospheric conditions. The substances are shielded from the atmosphere by a battery housing. In an example, the geometry of the battery housing leads to a stream of decompressing fluid at the battery terminal in case of a thermal runaway event.

In an example, the temperature and pressure of the thermal runaway event underly large variations. In an example, temperatures of the decompressing fluid stream may be as high as 1000 °C. In an example, pressure of the decompressing fluid exceeds more than one atm.

In an example, the decompressing fluid stream 30 originates at the battery terminal.

The battery terminal comprises the battery end, the battery cap and can be a release port of the decompressing fluid.

The term "cooling" relates to a decrease of the hot exhausts generated by the thermal runaway event. In an example, this is achieved by supplying another fluid, e.g., gas fluid into the decompressing fluid stream, which other fluid does have a lower temperature than the (hot) decompressing fluid stream 30. In an example, the cooling gas, i.e., a cooling fluid has ambient temperature, such as the temperature inside the or even outside the aircraft.

In an example, the cooling of the thermal runaway event is passive, i.e., it does not require any movable parts actively involved in the cooling process. The cooling is provided by a fluid supply activated mainly, e.g., at least partly, or in one case even exclusively, by the thermal runaway event.

In another example, the cooling of the thermal runaway event is active, i.e., the cooling process involves the activation of other means, e.g., a source providing the cooling fluid, such as a reservoir with the cooling fluid stored under high pressure. The cooling is provided by a fluid supply triggered by the thermal runaway event, but with at least some further external support actively supplying the cooling fluid.

The term "fluid-dynamically connected" relates to the connection of the conduit for fluids, i.e., to connections that are able to guide the decompressing fluid stream 30 away from the battery.

In an example, the conduit 16 is in fluid-dynamic connection to the battery.

In an example, the fluid-dynamic connection is provided between the primary inlet 18 of the conduit and the battery terminal to the enclosed volume accommodating the battery arrangement.

In an example, the primary inlet 18 of the conduit 16 is firmly attached to the battery terminal of the battery, such that the connection is able to sustain high pressure peaks of decompressing fluid.

In an example, the conduit 16 has a shape capable of restricting the decompressing fluid stream 30. In an example, the shape of the conduit 16 is a rod, pipe or tube.

In an example, the conduit 16 is configured to direct, shape and confine the stream of decompressing fluid while also cooling same.

In an example, the direction of the decompressing fluid stream 30 follows a main vector along the axial direction of the battery rod through the conduit 16 and pointing away from the battery.

In an example, the conduit 16 is mounted such that the primary inlet is arranged directly in front of a (possible) exit for decompressing fluid stream (30) originating from the battery arrangement in a thermal runaway event. As an example, the conduit 16 is attached to the battery, e.g. the battery housing, for example by attachment means. In a further example, the conduit 16 has a form-fit connection to the battery, e.g. the battery housing.

In an option, the decompressing fluid stream 30 is discharged at the outlet 22 of the conduit 16 that lies aligned on the main vector described by the fluid stream.

In an example, this leads to removal of energy of the thermal runaway event within the battery.

In an example, this mitigates the release of thermal energy in the immediate vicinity of the battery. Hence, it prevents leaking of corrosive chemicals and release of chemical energy at the battery and consequently protects the building elements and equipment of the vehicle, e.g., the airplane.

The surrounding atmosphere of the battery is any kind of gas other than decompressing fluid.

The secondary inlet is fluid-dynamically connected to the conduit 16 and thus able to conduct substances, i.e., a supply fluid, to the stream of decompressing fluids in the conduit 16.

In an example, the material of the conduit 16 is not permeable for gases or liquids, in other words, it is airtight.

In an example, the conduit 16 is provided as a tube made from heat and corrosion resistant materials and/or heat insulating materials, i.e., stainless steel, titanium or ceramics or a composite material comprising any one of the previously mentioned materials. The materials are chosen to withstand the condition of the thermal runaway event, such that they cope with high thermal peaks, high pressure peaks and corrosive materials like hydrogen fluoride. In a further example, the materials are chosen to be as light as possible and as stable as possible.

Fig. 2 schematically shows a cross section of a further example of a cooling arrangement 10. Fig. 2 schematically shows a cross section of another example of a cooling arrangement 10 having a narrowing 36. In the option of Fig. 2, the secondary inlet 20 is located between the primary inlet 18 and the outlet 22. The narrowing 36 of the conduit 16 is arranged between the primary inlet 18 and the secondary inlet 20. The narrowing 36 is provided as a continuously decreasing cross section configured to cause a downstream acceleration 38 of the fluid stream within the air flow passage towards to the outlet 22 in order to generate an extraction force 40 at the secondary inlet 20 to induce a flow 42 of the supply fluid via the secondary inlet 20 into the decompressing fluid stream 30.

In an example, in case of an occurring fluid stream from the primary inlet 18 towards the outlet 22, the narrowing 36 leads to a downstream acceleration of the fluid stream resulting in a suction force at the secondary inlet 20 to feed the supply fluid to the fluid stream. The second inlet 20 is configured to attract a second fluid supply by the directed stream of decompressing fluid such that the conduit 16 and the stream of decompressing fluid are cooled by the second fluid supply.

The term "downstream acceleration" means an increase of the mean velocity of the particles of the decompressing fluid stream from the battery to the outlet 22 of the cooling arrangement 10.

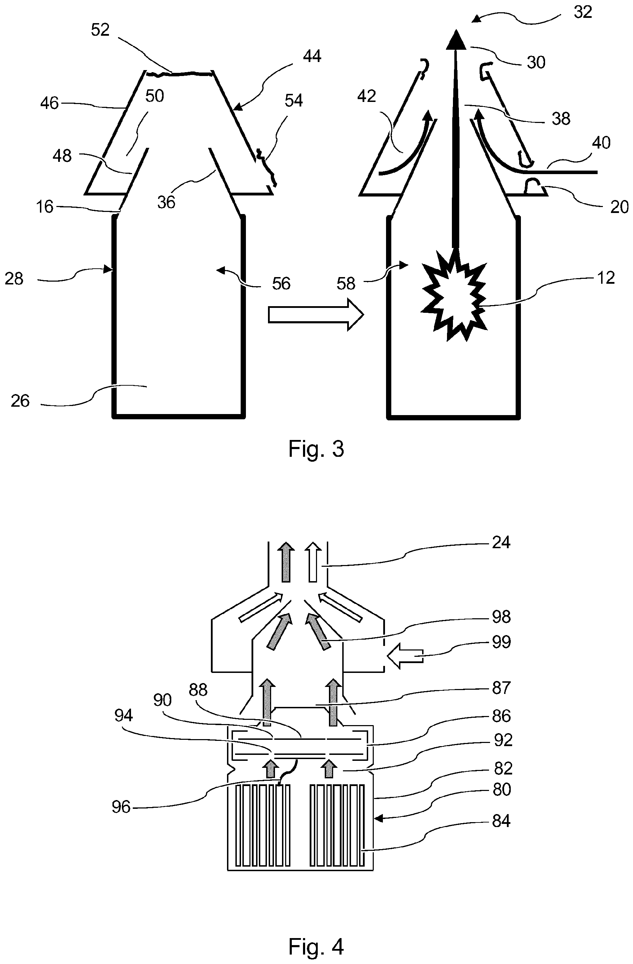

Fig. 3 schematically shows a further example with a narrowing. In Fig. 3, right-hand side, downstream acceleration is shown by means of line thickness of arrow 38.

The term "extraction force" can also be referred to as suction force, suction and understood as force that attracts other fluids.

In an example, the narrowing 36 between the primary inlet 18 and the secondary inlet 20 causes a lower pressure at the second inlet than the fluid pressure of the fluid supply at this inlet. It leads to a fluid suction at the fluid supply of the secondary inlet 20. This drag of fluid sucks supply fluid into the stream of the decompressing fluid, where they mix. The mixing leads to a dilution of the reactive components in the decompressing fluid.

The mixing in particular leads to cooling of the stream of the decompressing fluid and in consequence of the whole arrangement.

In an example, the shape of the conduit 16 leads to mixing of the stream of decompressing fluid with the surrounding atmosphere of the battery.

In an example, the outlet 22 has a cone-like cross section with the cone pointing to or away from the battery.

The term "narrowing" can also be referred to as constriction or restriction.

The narrowing 36 provides a continuously decreasing cross section of the inner walls of the conduit 16. In an example, the decrease of cross section is provided by the shape of the conduit 16. Hence, the narrowing of the conduit has a conical shape. The cone of the narrowing points to the secondary inlet and to the outlet of the conduit 16.

The narrowing of the conduit leads to a focusing of the decompressing fluid stream 30.

In an example, the narrowing 36 leads to a continuously increasing constrain of the stream of decompressing fluid from the primary inlet 18 to the secondary inlet 20.

Since pressure remains constant inside the conduit, velocity of the decompressing fluid stream increases as it passes the way from the first inlet to the secondary inlet 20, through the narrowing. Hence, in accord with the principle of conservation of mechanical energy, the static pressure of the decompressing fluid stream decreases at the secondary inlet 20.

In an example, shown in Fig. 3, the conduit 16 is provided with a thermal insulation arrangement 44. The thermal insulation arrangement 44 comprises an insulating envelope 46 enclosing at least a part 48 of the conduit. The insulating envelope 46 forms at least one supply channel 50 arranged between the conduit 16 and the insulating envelope 46. The supply channel 50 is fluid-dynamically connected to the secondary inlet 20 and configured to be fluid-dynamically connected to the outboard environment of the vehicle.

In an example, the supply channel 50 is arranged around the conduit 16 and enclosed by the insulating envelope 46.

In an example, the supply channel 50 provides a supply flow passage that is provided surrounding the air flow passage of the conduit 16 in a coaxial manner, e.g., concentrically.

The supply flow passage and the air flow passage are arranged in a counterflow manner or as a reverse flow concept. By supplying the cooling fluid, the air flow passage, i.e., the decompressing fluid stream is cooled due to the heat exchange via the separating wall forming the conduit, i.e., the wall structure enclosing the air flow passage.

The supply flow passage can be referred to as secondary air flow passage. The air flow passage of the conduit can be referred to as primary air flow passage.

In an option, the conduit is enclosed by an insulation unit. The enclosure provides access for discharge of the outlet by an opening. The space between the insulation unit and the conduit can be referred to as suction space or supply space.

Further, the suction space has access to fluid and provides same to the main decompressing fluid stream via the secondary inlet.

In an example, the insulation unit provides a narrowing similar to the narrowing of the outlet. In occurrence of a thermal runaway event, the decompressing fluid stream is discharged at the outlet. The discharge generates fluid suction in the suction space and drags fluid from the secondary inlet around the conduit to the opening of the insulation chamber.

The fluid cools the conduit and the decompressing fluid stream.

In an example, the moving fluid stream in the suction space forms an insulating shielding between the conduit and the insulation chamber.

This reduces the temperature in the proximity of the arrangement on the occurrence of a thermal runaway event and protects the vehicle.

In an option, shown in Fig. 3, at least one sealing closure 52, 54 is provided that is configured to provide a fluid-dynamically closed sealing in a first operation mode 56 and to provide a fluid-dynamical connection in a second operation mode 58.

The first operation mode is shown on the left-hand side of Fig. 3, the second operation mode is shown on the right-hand side of Fig. 3. The respective change is represented by an arrow.

The sealing closure is configured to change from the first operation mode to the second operation mode in case of the thermal runaway event 12. The outlet is provided with a first of the sealing closure 52 configured to fluid-dynamically seal off the air flow passage from the outboard environment of the vehicle in the first operation mode and to fluid-dynamically connect the air flow passage with the outboard environment in the second operation mode. The secondary inlet is provided with a second of the sealing closure 54 configured to fluid-dynamically seal off the air flow passage from secondary inlet towards the air flow passage in the first operation mode and to fluid-dynamically connect the air flow passage with the secondary inlet in the second operation mode.

In an option, the sealing closure is a breaking enclosure that withstands a range of pressure difference occurring under normal operating conditions of the vehicle, but that bursts when the pressure difference is above a predetermined threshold. The sealing closure is configured to open up in a passive manner in case of a thermal runaway event.

The term "fluid-dynamically closed" refers to a state that does not allow conduction or transmission or exchange of any fluid or solid matter between the spaces that are separated by the sealing.

In an example, the first closure is provided controllably closing the outlet 22. The first sealing closure can also be referred to as primary sealing closure. Further, the second sealing closure is provided controllably closing the secondary inlet 20. The second sealing closure can also be referred to as secondary sealing closure.

Fig. 4 shows another example of the cooling arrangement 10. A battery arrangement 80 is indicated with a battery can 82 as a housing for a pluralities of electrodes 84. Further, a plastic insert 86 is arranged above, e.g. a positive terminal 87, having a vent disk 88 that comprises grooves 90 for break-away events in case of sudden gas release 92. Below the vent disc 88, through holes 94 are arranged. A tab 96 is also shown. A hot stream 98 is mixed with cooler supply 99 within the air flow passage 24.

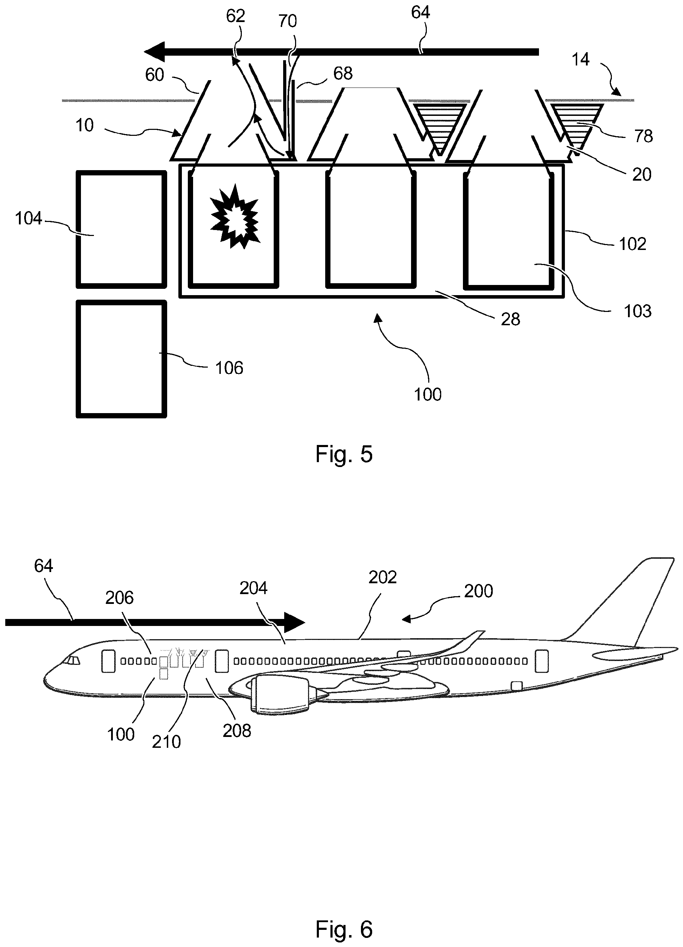

Fig. 5 schematically shows an example of a cooling arrangement connected to the outboard environment by an outlet. The outlet 22 is configured for a fluid-dynamic connection to the outboard environment as a primary opening 60 to generate a suction force 62 at the opening by an airstream 64 passing the outlet in case of a moving vehicle 14. The secondary inlet is in a fluid-dynamic connection to the outboard environment as a secondary opening 68 to the outside of the vehicle to generate a pressure force 70 at the second inlet by the airstream passing the outlet in case of a moving vehicle. Shown as an option, provided in addition, both openings are configured to open to the passing airstream by overpressure in the battery element.

In an example, the airstream of the vehicle is thus used to enhance the gas streaming effects of the arrangement.

The term "airstream" refers to alterations of pressure in the outboard environment, i.e., the atmosphere, of the vehicle, when the vehicle moves in the atmosphere, or the atmosphere moves relative to the vehicle.

The second inlet is connected to the opening to the airstream of the vehicle. The opening is provided with a protrusion opposing the airstream. Another protrusion is provided at the opening to the airstream for the opening of the insulation chamber. This protrusion causes air swirls in the airstream which generate gas suction at the insulation chamber. This way, the airflow between the secondary inlet and the opening of the insulation chamber is enhanced, and the cooling of the decompressing fluid stream as well.

In an example of Fig. 5, as an option, the secondary inlet 20 is configured to be fluid-dynamically connected to a cooling fluid supply 78 configured to actively feed the supply fluid into the decompressing fluid stream. In an example, the cooling fluid supply is a pressurized gas storage.

In another example, the cooling fluid supply comprises an actively driven gas pump.

In an option, a cooling fluid supply is provided configured to actively feed the supply fluid into the decompressing fluid stream. Further, the secondary inlet is fluid-dynamically connected to the cooling fluid supply.

Preferably, the cooling fluid supply resides above the battery elements and above the cooling arrangement. The term "above" refers to the orientation of the vehicle when being parked.
In an example not shown in Fig. 5, the cooling arrangement further comprises a metal grid 72. The metal grid is located in the conduit upstream of the air flow passage and is configured to prevent direct blow-out of particulate matter into the air flow passage from the enclosed volume accommodating the battery arrangement.

In an option, not shown in Fig. 5, the cooling arrangement comprises a flame arrester 74 arranged inside the air flow passage.

In an example, not shown in Fig. 5, the cooling arrangement comprises an oxygen separator 76. The oxygen separator is arranged at the secondary inlet to drag supply fluid through the oxygen separator by the stream of decompressing fluid. The oxygen separator is configured to deplete oxygen of the supply fluid before the supply fluid mixes with the stream of decompressing fluid.

In an example, the flame arrester functions by absorbing the heat from a flame front of the decompressing fluid, thus dropping the burning gas/air mixture below its autoignition temperature; consequently, the flame does not survive.

In an example, the heat of the decompressing fluid is absorbed through channels designed into the conduit or the insulating unit. In an example, the passages are regular or wire mesh or a sheet metal plate with punched holes, or irregular.

In an example, when decompressing fluids are released in the conduit, they carry particulate matter from the enclosed volume accommodating a battery arrangement to the outside of the battery element, as has been described before.

The term "blow-out" can also be referred to as release, scattering or spreading of particulate matter in the stream of the decompressing fluid.

The particulate matter can ignite the decompressing fluid and nurture the resulting flame. A grid before the conduit holds back the particulate matter and prevents emission of the particles into the stream of decompressing fluid. In an example, the grid is made from a corrosion and heat resistant material. In a further example, the grid is made from a material that prevents clogging of the grid when in contact to the inner environment of the battery cell. In an example, the materials are metal or ceramics.

As an effect, release of chemical energy by particulate matter in the stream of decompressing fluid is prevented.

In an example, an oxygen separator is arranged before the secondary inlet.

The suction force of suction space is exploited to drive oxygen separation in the oxygen separator. The suction space drags atmospheric gases through the oxygen separator.

The oxygen separator depletes the oxygen in the atmospheric supply gas to yield a nitrogen-rich supply gas.

In an example, this can be accomplished completely passive, using a gas separation unit based on membranes. Gas permeation through membranes for gas separation is exploited. Although oxygen has a greater molecular weight than nitrogen, oxygen is smaller in size due to its electronic structure. Due to the kinetic diameter of these molecules, e.g., from gas viscosity data, 2.96 Ångström for oxygen and 3.16 Ångström for nitrogen, oxygen permeates approximately 3-4 times faster than N2 through rubber. Therefore, rubber can be used for gas separation from the outboard environment. This way, an abundant source of inert gas is accessed from the surrounding atmosphere of the vehicle.

As an effect, a simple and cost-efficient approach of generating inert gas results. In an example, a further source of heat and ignition of the stream of decompressing fluid is oxygen. In an option, to decrease the oxygen content of the stream of decompressing fluid and the atmosphere surrounding the stream of decompressing fluid, inert gases are mixed or exposed to the stream of decompressing fluid. In an example, the inert gases are nitrogen, carbon dioxide or argon gas. In a further example, the gases are cooled down or are applied in liquid phase or supercritical state.

In an example not shown in Fig. 5, in the cooling arrangement, the secondary inlet 20 is configured to provide the supply fluid as: a gas and/ or the gas carrying a liquid medium and/ or the liquid medium.

In an example, the supply fluid is a gas and resides in gaseous form under conditions of operation. In an option, the gas carries a liquid medium. The liquid medium or liquid is carried as separate phase from the gaseous phase, in the form of droplets, e.g., as an aerosol or nebula. In another example, the liquid is solvated in the gas. In another option, the secondary inlet provides the supply fluid mainly as liquid. The liquid is a coolant configured to take up heat. In an example, the coolant resides at temperatures lower than temperatures aboard the vehicle. In an example, the liquid reacts chemically to quench the reactions in the decompressing fluid or to mitigate the exothermic reaction in the decompressing fluid. In an option, the secondary inlet is configured to alternate between the three options of gas, and/ or gas carrying a liquid, and/ or the liquid.

In an example, the secondary inlet is fluid-dynamically connected to a or several reservoirs or tanks of pressurized and/ or cooled supply fluid. The reservoirs can contain gas and/ or liquid.

In an example not shown in Fig. 5, the secondary inlet is configured to provide the supply fluid as an inert gas.

In an option, a cooling gas supply is provided that is configured to supply the inert gas.

Fig. 5 also schematically shows an electric energy supply system 100 with a cooling for thermal runaway events. The system 100 comprises at least one housing 102. The housing forms an enclosed volume configured for accommodating at least one energy source arrangement battery element 103. The system 100 also comprises at least one cooling arrangement 10 according to one of the preceding claims. The primary inlet is fluid-dynamically connected to the enclosed volume. The outlet is configured to be fluid-dynamically connected outboard of the vehicle.

In an example of Fig. 5, the at least one energy source arrangement is provided as a battery arrangement 28 comprising at least one battery element and/ or a fuel cell arrangement 104 comprising at least one fuel cell element and a feed fluid supply 106.

In an option, as the battery element, a battery arrangement with at least one battery cell is provided. The at least one battery cell is arranged inside the enclosed volume. In an example, the battery arrangement comprises several, i.e., at least two, e.g., two, three, four, five, six, seven, eight, nine or ten or even more battery cells.

In an example, the cooling arrangement is connected to groups of battery cells of the battery arrangement.

In another example, cooling arrangements are connected to every battery cell of the battery arrangement.

In an example, the feed fluid supply comprises a stored form of energy. The stored form of energy is chemical or electrical energy.

In an option, both the battery arrangement and the fuel cell arrangement are provided.

In an option not shown in Fig. 5, the battery element is provided with a battery enclosure and the conduit is fluid-dynamically connected to a predetermined breaking point 108 of the battery enclosure.

The battery enclosure can also be referred to as battery housing.

In an example, the battery contains a predetermined breaking point that opens up in case of pressure peaks inside the battery. In an example, the predetermined breaking points are break disks. By breaking up the break disks, decompressing fluids are released into the subsequent conduit.

In an example, the breaking disks are chosen from a material that does not lead to a fragmentation of the breaking disks, which would otherwise block the conduit.

Fig. 6 schematically shows an example of a vehicle empowered by an electric energy supply system with a cooling for thermal runaway events. The vehicle 200 comprises an electric energy supply with a safety cooling for thermal runaway events. The vehicle comprises a body structure 202 with a vehicle envelope 204 enclosing at least one vehicle space 206, an electric energy supply system according to the system 100 shown in Fig. 5 and described before, and at least one electric load 208. The at least one electric load is supplied by the electric energy supply system. The electric energy supply system is arranged within the vehicle space. The outlet is fluid-dynamically connected outboard of the vehicle. As an option, provided in addition, the vehicle is provided as at least one of the group comprising an aircraft, an automotive vehicle, a ship and a train.

In an option, the aircraft is a commercial passenger aircraft or a commercial freight aircraft.

In an example of Fig. 6, the secondary inlet and the outlet are configured to have access to an airstream 64 outside the vehicle. The accesses 210 to the airstream of the vehicle are configured to open to the airstream in case of an occurring thermal runaway event. The second inlet is configured to supply the airstream.

In an example, the arrangement is connected to the battery. The battery itself is part of a vehicle that generates airstream while moving through an atmosphere.

As an advantage, the airstream of the vehicle itself is used as the supply fluid and supply way to discharge the decompressing fluid stream.

In an example, the airstream originates from outside the moving vehicle or an acceleration unit or a cooling unit. The access to the airstream is also used to prevent spreading of decompressing fluid inside the vehicle and to protect the passengers and the vehicle parts from corrosive and toxic substances. Hence, an airtight connection between conduit and the access to the airstream outside of the vehicle is provided.

In an option, the accesses to the airstream open up to the airstream in case of a thermal runaway event. In an example, the opening is initiated by the thermal runaway event itself. Hatches open up at the accesses by pressure building up in the arrangement. In a further example, membranes are provided at the accesses or openings that burst by reaching a predetermined overpressure threshold in the arrangement.

In an example, an aircraft is provided empowered by battery arrangements.

Thermal runaway of the battery arrangements is mitigated by the cooling arrangements, which are connected to the airstream of the aircraft.

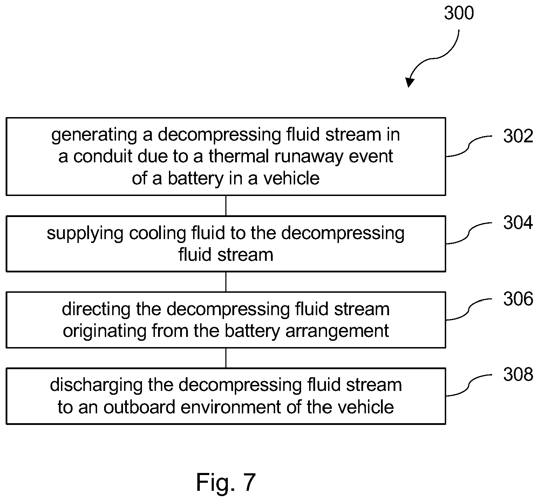

Fig. 7 shows basic steps of an example of a method 300 for cooling thermal runaway events. The method 300 comprises the following steps: In a first step 302, a decompressing fluid stream is generated in a conduit due to a thermal runaway event of a battery in a vehicle. In a further step 304, cooling fluid is supplied to the decompressing fluid stream. In a still further step, the decompressing fluid stream originating from the battery arrangement is directed 306 and in another step, the decompressing fluid stream is discharged 308 to an outboard environment of the vehicle.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A cooling arrangement (10) for cooling of thermal runaway events of batteries in a vehicle, the arrangement having a conduit (16), wherein the conduit comprises:
- a primary inlet (18);
- a secondary inlet (20);
- an outlet (22); and
- an air flow passage (24);
wherein the air flow passage is provided between the primary inlet and the outlet;
wherein the primary inlet is configured to be fluid-dynamically connected to an enclosed volume (26) accommodating a battery arrangement (28), in order to direct a decompressing fluid stream (30) originating from the battery arrangement in a thermal runaway event via the air flow passage;
wherein the outlet is configured to discharge the decompressing fluid stream to an outboard environment (32) of the vehicle; and
wherein the secondary inlet is configured to provide a supply fluid (34) cooling the decompressing fluid stream.

2. Cooling arrangement according to claim 1, wherein the secondary inlet is located between the primary inlet and the outlet;
wherein a narrowing (36) of the conduit is arranged between the primary inlet and the secondary inlet; and
wherein the narrowing provided as a continuously decreasing cross section configured to cause a downstream acceleration (38) of the fluid stream within the air flow passage towards to the outlet in order to generate an extraction force (40) at the secondary inlet to induce a flow (42) of the supply fluid via the secondary inlet into the decompressing fluid stream.

3. Cooling arrangement according to claim 1 or 2, wherein the conduit is provided with a thermal insulation arrangement (44) comprising an insulating envelope (46) enclosing at least a part (48) of the conduit;
wherein the insulating envelope forms at least one supply channel (50) arranged between the conduit and the insulating envelope; and
wherein the supply channel is fluid-dynamically connected to the secondary inlet; and configured to be fluid-dynamically connected to the outboard environment of the vehicle.

4. Cooling arrangement according to one of the preceding claims, wherein at least one sealing closure (52, 54) is provided that is configured to provide a fluid-dynamically closed sealing in a first operation mode (56) and to provide a fluid-dynamical connection in a second operation mode (58);
wherein the sealing closure is configured to change from the first operation mode to the second operation mode in case of the thermal runaway event (12); and
wherein:
i) the outlet is provided with a first of the sealing closure (52) configured to fluid-dynamically seal off the air flow passage from the outboard environment of the vehicle in the first operation mode and to fluid-dynamically connect the air flow passage with the outboard environment in the second operation mode; and/or
ii) the secondary inlet is provided with a second of the sealing closure (54) configured to fluid-dynamically seal off the air flow passage from secondary inlet towards the air flow passage in the first operation mode and to fluid-dynamically connect the air flow passage with the secondary inlet in the second operation mode.

5. Cooling arrangement according to one of the preceding claims, wherein the outlet is configured for a fluid-dynamic connection to the outboard environment as a primary opening (60) to generate a suction force (62) at the opening by an airstream (64) passing the outlet in case of a moving vehicle (14); and/or
wherein the secondary inlet is in a fluid-dynamic connection to the outboard environment as a secondary opening (68) to the outside of the vehicle to generate a pressure force (70) at the second inlet by the airstream passing the outlet in case of a moving vehicle; and
wherein both openings are configured to open to the passing airstream by overpressure in the battery element.

6. Cooling arrangement according to one of the preceding claims, further comprising:
i) a metal grid (72), wherein the metal grid is located in the conduit upstream of the air flow passage, and is configured to prevent direct blow-out of particulate matter into the air flow passage from the enclosed volume accommodating the battery arrangement; and/or
ii) a flame arrester (74) arranged inside the air flow passage; and/or
iii) an oxygen separator (76), wherein the oxygen separator is arranged at the secondary inlet to drag supply fluid through the oxygen separator by the stream of decompressing fluid; and wherein the oxygen separator is configured to deplete oxygen of the supply fluid before the supply fluid mixes with the stream of decompressing fluid.

7. Cooling arrangement according to one of the preceding claims, wherein the secondary inlet is configured to provide the supply fluid as:
i) gas; and/ or
ii) gas carrying a liquid medium; and/ or
iii) liquid medium.

8. Cooling arrangement according to one of the preceding claims, wherein the secondary inlet is configured to provide the supply fluid as an inert gas.

9. Cooling arrangement according to one of the preceding claims, wherein the secondary inlet is configured to be fluid-dynamically connected to a cooling fluid supply (78) configured to actively feed the supply fluid into the decompressing fluid stream.

10. An electric energy supply system (100) with a cooling of thermal runaway events of an electric energy source for a vehicle (14), the system comprising:
- at least one housing (102) forming an enclosed volume configured for accommodating at least one energy source arrangement battery element; and
- at least one cooling arrangement (10) according to one of the preceding claims;
wherein the primary inlet is fluid-dynamically connected to the enclosed volume; and
wherein the outlet is configured to be fluid-dynamically connected outboard of the vehicle.

11. Electric energy supply system according to claim 10, wherein the at least one energy source arrangement is provided as:
i) a battery arrangement comprising at least one battery element; or
ii) a fuel cell arrangement (104) comprising at least one fuel cell element and a feed fluid supply (106).

12. Electric energy supply system according to claim 11, wherein the battery element (103) is provided with a battery enclosure and the conduit is fluid-dynamically connected to a predetermined breaking point (108) of the battery enclosure.

13. A vehicle (200) comprising an electric energy supply with a safety cooling for thermal runaway events, the vehicle comprising:
- a body structure (202) with a vehicle envelope (204) enclosing at least one vehicle space (206);
- an electric energy supply system (100) according to claim 12 or 13; and
- at least one electric load (208);
wherein the at least one electric load is supplied by the electric energy supply system;
wherein the electric energy supply system is arranged within the vehicle space;
wherein the outlet is fluid-dynamically connected outboard of the vehicle; and
wherein the vehicle is provided as at least one of the group comprising an aircraft, an automotive vehicle, a ship and a train.

14. Vehicle according to claim 13, wherein the secondary inlet and the outlet are configured to have access to an airstream outside the vehicle; and
wherein the accesses (210) to the airstream of the vehicle are configured to open to the airstream in case of an occurring thermal runaway event; and
wherein the second inlet is configured to supply the airstream.

15. A method (300) for cooling thermal runaway events, comprising the steps:
- generating (302) a decompressing fluid stream in a conduit due to a thermal runaway event of a battery in a vehicle;
- supplying (304) cooling fluid to the decompressing fluid stream;
- directing (306) the decompressing fluid stream originating from the battery arrangement; and
- discharging (308) the decompressing fluid stream to an outboard environment of the vehicle.
